# EUROPEAN PATENT APPLICATION

(11) **EP 2 081 367 A1**
(43) Date of publication of application: **22.07.2009**
(21) Application number: 08169715.3
(22) Date of filing: 21.11.2008
(51) Int. Cl.: H04M 1/02

(54) **Clamshell handheld electronic, communication device with pivotally coupled interconnector**

(30) Priority: 18.01.2008 EP 08150413
(71) Applicant: Research In Motion Limited, Waterloo, Ontario N2L 3W8 (CA)
(72) Inventor: Griffin, Jason T., Kitchener, Ontario, N2P 2L3 (CA); Rak, Roman, Waterloo, Ontario, N2T 2V8 (CA)
(74) Representative: Roberts, Gwilym Vaughan

(57) **Abstract**

A clamshell handheld wireless communication device having a hinging interconnector between the two housings, one in which the display screen is located and the other upon which the keyboard is located. The hinging interconnector may be so configured to resiliently transition from an operating configuration in which the display screen housing and keyboard housing are oblique to one another, to a more fully open configuration while remaining biased to the operating configuration.

## Description

### CLAIM TO PRIORITY

The present application claims priority benefit to European Patent Application 08150413.6-2414, filed on 18 January 2008.

### FIELD

This disclosure, in a broad sense, is directed toward a handheld communication device that has wireless communication capabilities and the networks within which the wireless communication device operates. The present disclosure further relates to a clamshell handheld electronic communication device with a connector for pivotally connecting a first housing to a second housing.

### BACKGROUND

With the proliferation of wireless communication systems, compatible handheld communication devices are becoming more prevalent, as well as advanced. Whereas in the past such handheld communication devices were typically limited to either voice transmission (cell phones) or text transmission (pagers and PDAs), today's consumer often demands a multifunctional device capable of performing both types of transmissions, including even sending and receiving e-mail. Furthermore, these higher-performance devices can also be capable of sending and receiving other types of data including that which allows the viewing and use of Internet websites. These higher level functionalities necessarily require greater user interaction with the devices through included user interfaces (UIs) which may have originally been designed to accommodate making and receiving telephone calls and sending messages over a related Short Messaging Service (SMS). As might be expected, suppliers of such mobile communication devices and the related service providers are anxious to meet these customer requirements, but the demands of these more advanced functionalities have in many circumstances rendered the traditional user interfaces unsatisfactory, a situation that has caused designers to have to improve the UIs through which users input information and control these sophisticated operations.

Keyboards are used on many handheld devices, including telephones and mobile communication devices. The size of keyboards has been reduced over the years, as newer, smaller devices have become popular. Cell phones, for example, are now sized to fit in one's pocket or the palm of the hand. As the size of the devices has decreased, it has become more important to utilize the entire keyboard surface as efficiently as possible.

While efficient use of space is an issue for handheld communication devices, another issue is usability in multiple environments. As handheld communication devices become more prevalent, customers continue to use such devices more often and in more locations and environments. This leads to the issue of durability, an example being that some handheld electronic communication devices may be prone to breakage at the area where the display and keyboard sections meet.

### BRIEF DESCRIPTION OF THE DRAWINGS

Exemplary methods and arrangements conducted and configured according to the advantageous solutions presented herein are depicted in the accompanying drawings wherein:

FIG. 1 illustrates a clamshell handheld wireless communication device in a closed configuration;

FIG. 2 is a block diagram representing a wireless handheld communication device interacting in a communication network;

FIG. 3A illustrates an exemplary QWERTY keyboard layout;

FIG. 3B illustrates an exemplary QWERTZ keyboard layout;

FIG. 3C illustrates an exemplary AZERTY keyboard layout;

FIG. 3D illustrates an exemplary Dvorak keyboard layout;

FIG. 4 illustrates a QWERTY keyboard layout paired with a traditional ten-key keyboard;

FIG. 5 illustrates ten digits comprising the numerals 0-9 arranged in a traditional, ITU Standard E.161 numeric telephone keypad layout, including the * and # keys flanking the 0 key;

FIG. 6 illustrates a traditional or standard phone key arrangement or layout according to the ITU Standard E.161 including both numerals and letters;

FIG. 7 illustrates a front perspective view of a clamshell handheld wireless communication device in a closed configuration;

FIG. 8 illustrates a rear view thereof;

FIG. 9 illustrates a right side view of a clamshell handheld wireless communication device in a closed configuration;

FIG. 10 illustrates a left side view thereof;

FIG. 11 illustrates a top plan view thereof;

FIG. 12 illustrates a bottom plan view thereof;

FIG. 13 illustrates left side perspective view of a clamshell handheld wireless communication device in an operating configuration;

FIG. 14 illustrates a rear view thereof;

FIG. 15 illustrates a front view of a clamshell handheld wireless communication device in an operating configuration;

FIG. 16 illustrates a right side view thereof;

FIG. 17 illustrates a left side view thereof;

FIG. 18 illustrates a left side view of a clamshell handheld wireless communication device transitioning into the fully open configuration;

FIG. 19 illustrates a spring assembly within the pivotal interconnector of the clamshell handheld wireless communication device;

FIG. 20 illustrates a topside view of a clamshell handheld wireless communication device in an operating configuration; and

FIG. 21 illustrates a bottom view thereof.

### DETAILED DESCRIPTION

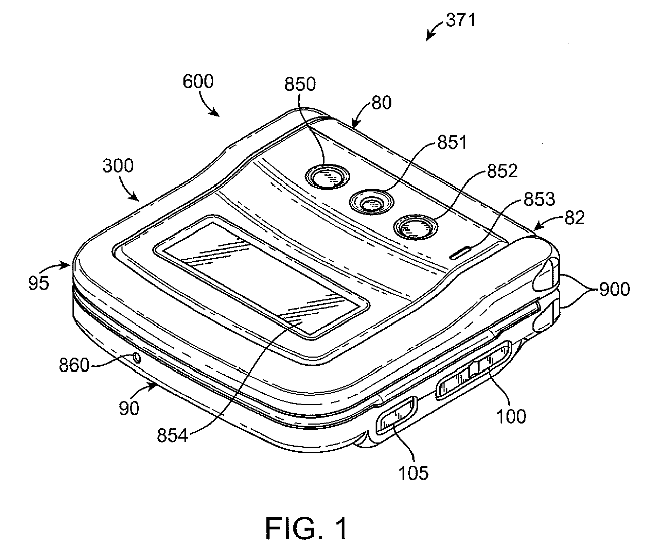

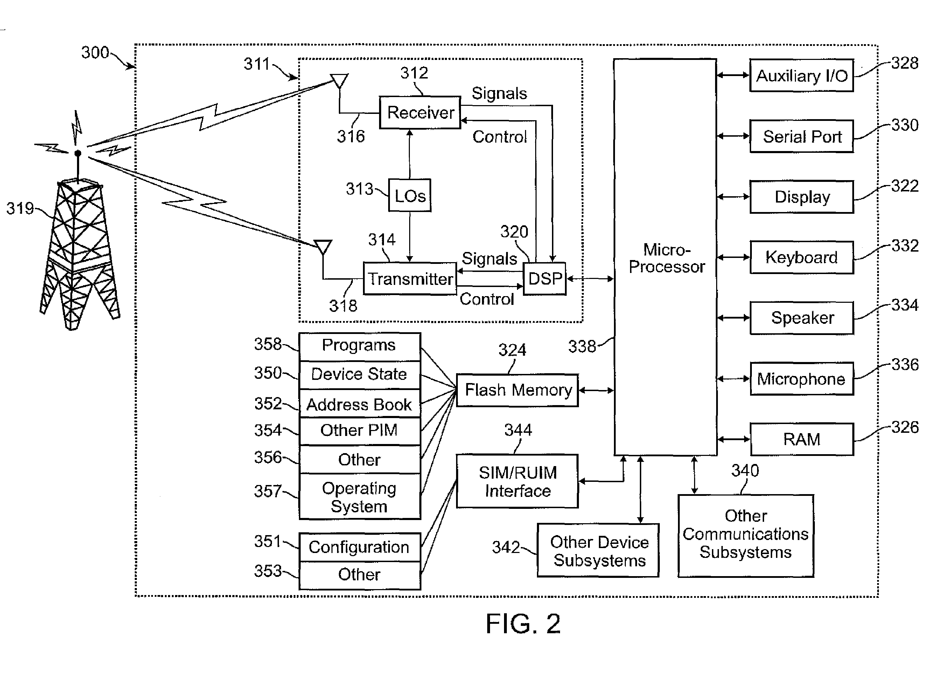

An example of a clamshell handheld wireless communication device 300 is shown in FIG. 1 in a closed configuration 600 and the device's cooperation in a wireless network 319 is exemplified in the block diagram of FIG. 2. All figures in the present disclosure are exemplary only, and those persons skilled in the art will appreciate the additional elements and modifications necessary to make the device 300 work in particular network environments.

As demonstrated in FIG. 2, it is contemplated that communication by the handheld device 300 with the wireless network 319 can be any type of communication that both the wireless network 319 and handheld device 300 are enabled to transmit, receive and process. In general, these can be classified as voice and data. Voice communication is communication in which signals for audible sounds are transmitted by the handheld device 300 through the communication network 319. Data is all other types of communication that the handheld device 300 is capable of performing within the constraints of the wireless network 319 as depicted in FIG. 2.

Also as shown in the block diagram of FIG. 2, the handheld device 300 includes a microprocessor 338 that controls the operation of the device 300. A communication subsystem 311 performs all communication transmission and reception with the wireless network 319. The microprocessor 338 further connects with an auxiliary input/output (I/O) subsystem 328, a serial port (preferably a Universal Serial Bus port) 330, a display 322, a keyboard 650, a speaker 334, a microphone 336, random access memory (RAM) 326, and flash memory 324. Other communication subsystems 340 and other device subsystems 342 are generally indicated as being functionally connected with the microprocessor 338 as well. An example of a communication subsystem 340 is that of a short range communication system such as BLUETOOTH® communication module or a Wi-Fi communication module (a communication module in compliance with IEEE 802.11b) and associated circuits and components. Additionally, the microprocessor 338 is able to perform operating system functions and preferably enables execution of software applications on the handheld wireless communication device 300.

As further demonstrated by FIG. 2. In an exemplary embodiment, the flash memory 324 is enabled to provide a storage location for the operating system 357, device programs 358, and data. The operating system 357 is generally configured to manage other application programs 358 that are also stored in memory 324 and executable on the processor 338. The operating system 357 honors requests for services made by application programs 358 through predefined application program 358 interfaces. More specifically, the operating system 357 typically determines the order in which multiple applications 358 are executed on the processor 338 and the execution time allotted for each application 358, manages the sharing of memory 324 among multiple applications 358, handles input and output to and from other device subsystems 342, and so on. In addition, users can typically interact directly with the operating system 357 through a user interface, which can include the keyboard 650 and display screen 322. While in an exemplary embodiment the operating system 357 is stored in flash memory 324, the operating system 357 in other embodiments is stored in read-only memory (ROM) or similar storage element (not shown). As those skilled in the art will appreciate, the operating system 357, device application 358 or parts thereof may be loaded in RAM 326 or other volatile memory.

With further reference to FIG. 2, the flash memory 324 may contain programs/applications 358 for execution on the handheld device 300 including an address book 352, a personal information manager (PIM) 354, and the device state 350. Furthermore, programs 358 and other information 356 including data can be segregated upon storage in the flash memory 324 of the handheld device 300.

When the communication device 300 is enabled for two-way communication within the wireless communication network 319 as depicted in FIG. 2, it can send and receive signals from a mobile communication service. Examples of communication systems enabled for two-way communication include, but are not limited to, the General Packet Radio Service (GPRS) network, the Universal Mobile Telecommunication Service (UMTS) network, the Enhanced Data for Global Evolution (EDGE) network, the Code Division Multiple Access (CDMA) network, High-Speed Packet Access (HSPA) networks, Universal Mobile Telecommunication Service Time Division Duplexing (UMTS-TDD), Ultra Mobile Broadband (UMB) networks, Worldwide Interoperability for Microwave Access (WiMAX), and other networks that can be used for data and voice, or just data or voice. For the systems listed above, the communication device 300 may require a unique identifier to enable the communication device 300 to transmit and receive signals from the communication network 319. Other systems may not require such identifying information. GPRS, UMTS, and EDGE use a Subscriber Identity Module (SIM) in order to allow communication with the communication network 319. Likewise, most CDMA systems use a Removable Identity Module (RUIM) in order to communicate with the CDMA network. The RUIM and SIM card can be used in multiple different communication devices 300. The communication device 300 may be able to operate some features without a SIM/RUIM card, but it will not be able to communicate with the network 319. A SIM/RUIM interface 344 located within the communication device 300 allows for removal or insertion of a SIM/RUIM card (not shown). The SIM/RUIM card features memory and holds key configurations 351, and other information 353 such as identification and subscriber related information. With a properly enabled communication device 300, two-way communication between the communication device 300 and communication network 319 is possible.

When equipped for two-way communication, the handheld wireless communication device 300 also features a communication subsystem 311 as indicated in FIG. 2. The communication subsystem 311 may modified so that it can support the operational needs of the handheld device 300. As shown in FIG.2 , the subsystem 311 includes a transmitter 314 and receiver 312 including the associated antenna or antennae 316, 318 as described above, local oscillators (LOs) 313, and a processing module 320 which in the presently described exemplary embodiment is a digital signal processor (DSP) 320.

If the handheld wireless communication device 300 is enabled as described above or the communication network 319 as shown in FIG. 2 does not require such enablement, the two-way communication enabled handheld device 300 is able to both transmit and receive information from the communication network 319. The transfer of communication can be from the handheld device 300 or to the device 300. In order to communicate with the communication network 319, the handheld device 300 in the presently described exemplary embodiment is equipped with an integral or internal antenna 318 for transmitting signals to the communication network 319. Likewise the handheld wireless communication device 300 in the presently described exemplary embodiment is equipped with another antenna 316 for receiving communication from the communication network 319. These antennae 316, 318 in another exemplary embodiment are combined into a single antenna (not shown). As one skilled in the art would appreciate, the antenna or antennae 316, 318 in another embodiment could be externally mounted on the handheld device 300.

Example device 300 applications, such as shown in FIG. 2, that can depend on such data include email, contacts and calendars. For each such application synchronization with home-based versions on the applications can be critical for either or both of their long term and short term utility. As an example, emails are often time sensitive, so substantially real time synchronization is highly desirable. Contacts, on the other hand, can be usually updated less frequently without inconvenience. Therefore, the utility of the handheld device 300 is significantly enhanced when connectable within a communication system, and particularly when connectable on a wireless basis in a network 319 in which voice, text messaging, and other data transfer are accommodated.

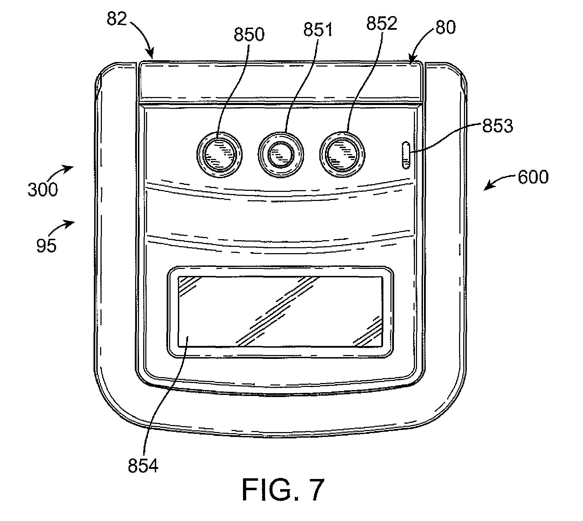

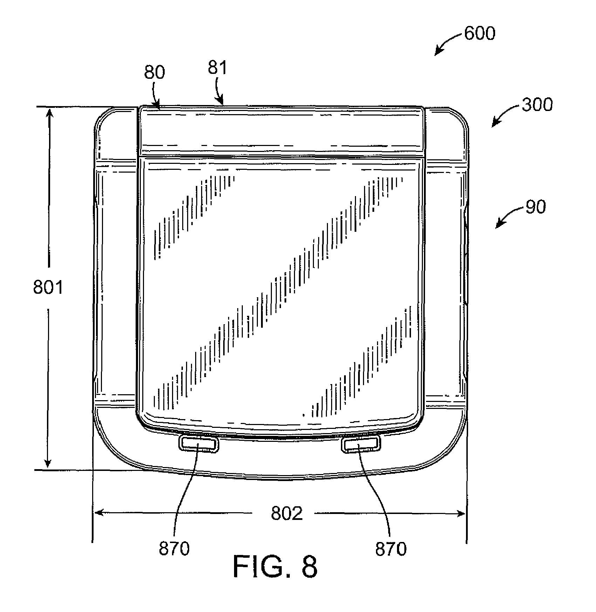

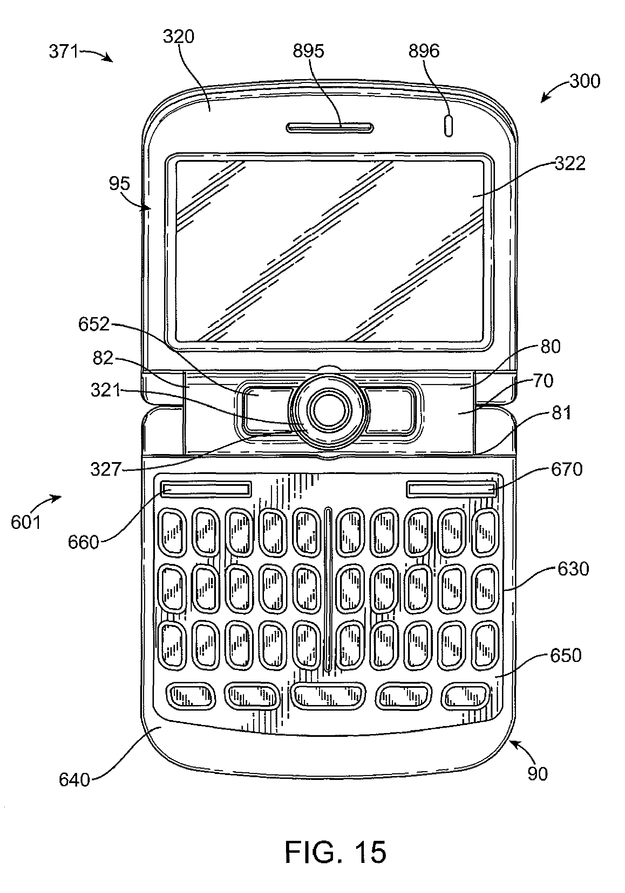

As intimated hereinabove, one of the more important aspects of the handheld wireless communication device 300 to which this disclosure is directed is its size - FIG. 7 being an example. While some users will grasp the handheld device 300 in both hands, it is intended that a predominance of users will cradle the handheld device 300 in one hand in such a manner that input and control over the handheld device 300 can be effected using the thumb of the same hand in which the handheld device 300 is held. However, it is appreciated that additional control can be effected by using both hands. As a handheld device 300 that is easy to grasp and desirably pocketable, the size of the handheld device 300 must be kept commensurately small. Of the device's dimensions, limiting its width is important for the purpose of assuring cradleability in a user's hand. Moreover, it is preferred that the width of the handheld device 300 be maintained at less than eight centimeters (approximately three inches). Keeping the handheld device 300 within these dimensional limits provides a hand cradleable unit that users prefer for its usability and portability. Limitations with respect to the height (length) of the handheld device 300 are less stringent when considering hand-cradleability. Therefore, in order to gain greater size, the handheld device 300 can be elongated so that its length is greater than its width, but still remains easily supported and operated in one hand while in the operating configuration 601, as can be seen in FIG. 15. However, the device can be so configured so as to also have a length 801 which is smaller than its width 802, as can be seen in FIG. 8.

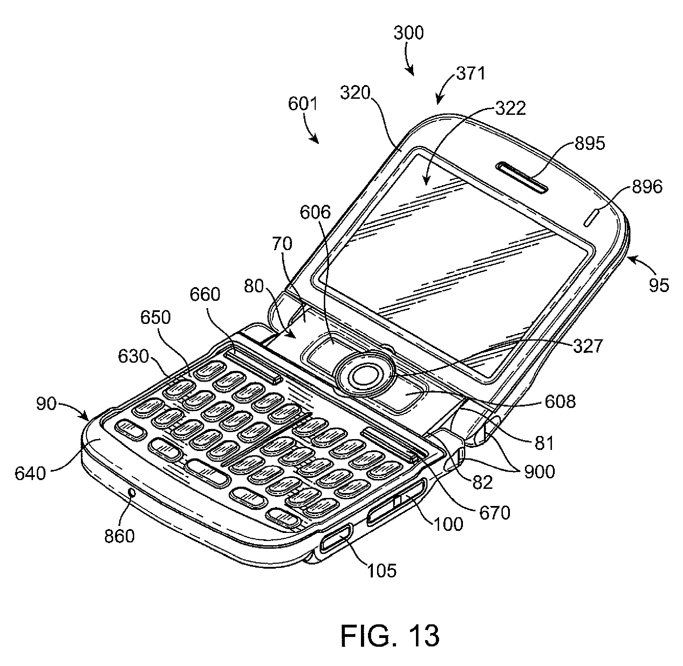

A potential drawback is presented by the small size of the handheld device 300 in that there is limited exterior surface area for the inclusion of user input and device output features. This is especially true for the "prime real estate" on the keyboard face 640 of the handheld device 300 in the operating configuration 601, where it is most advantageous to include a display screen 322 that outputs information to the user. As shown in FIG. 13, the display screen 322 is preferably located above a keyboard 650 that is utilized for data entry into the handheld device 300 by the user. If the screen 322 is provided below the keyboard 650, a problem occurs in that viewing the screen 322 is inhibited when the user is inputting data using the keyboard 650. Therefore in the embodiment shown in FIG. 13, the display screen 322 is above the navigation row 70 and keyboard 650, thereby solving the problem by assuring that the hands and fingers do not block the view of the screen 322 during data entry periods. This property is enhanced by the fact that the angle between the keyboard face 640 and the interconnector 80, and the angle between the interconnector 80 and the display face 320 can each take separate values, and thus more positional options exist for the user.

The auxiliary I/O subsystem 328 can take the form of a variety of different navigation tools (multi-directional or single-directional) such as a navigation tool 327 with trackball 321 as illustrated in the exemplary embodiment shown in FIG. 13 for example, or a thumbwheel, a navigation pad, a joystick, or the like (not shown). As will be developed more fully below, these navigation tools are located on the front surface of the handheld device 300 when in an operating configuration 601 but may also be located on any exterior surface of the handheld device 300. Other auxiliary I/O subsystems can include external display devices and externally connected keyboards (not shown). While the above examples have been provided in relation to the auxiliary I/O subsystem 328, other subsystems capable of providing input or receiving output from the handheld device 300 are considered within the scope of this disclosure. Additionally, other keys may be placed along the side of the handheld device 300 to function as escape keys, volume control keys 100, scrolling keys, power switches, or user programmable keys (105, 120), and may likewise be programmed accordingly.

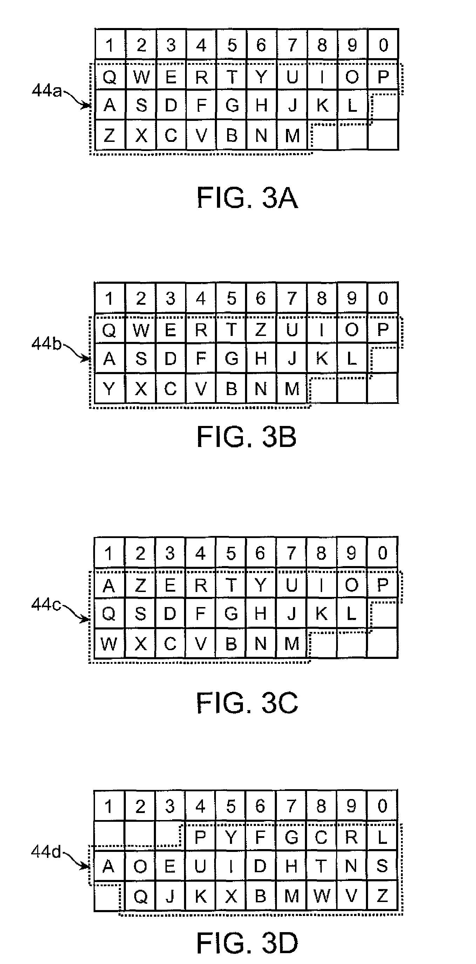

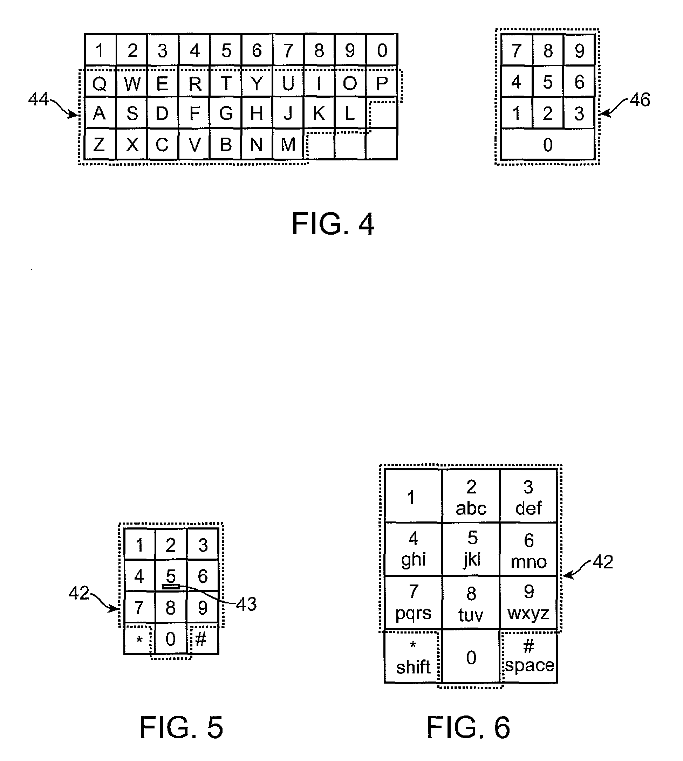

FIG. 3 shows the four possible keyboard 650 configurations, the QWERTY 44a, the QWERTZ 44b, the AZERTY 44c and the DVORAK 44d. FIG. 4 illustrates a QWERTY keyboard layout paired with a traditional ten-key keypad. Those skilled in the art will realize that the keyboard 650, shown in FIG. 15 for example, may be configured so as to comprise one or more to these possible layouts. All of these possible configurations are ITU compliant. The International Telecommunications Union ("ITU") has established phone standards for the arrangement of alphanumeric keys, entitled "Arrangement of Digits, Letters, and Symbols on Telephones and Other Devices That Can Be Used for Gaining Access to a Telephone Network." This standard is also known as ANSI TI.703-1995/1999 and ISO/IEC 9995-8:1994.

As may be seen in FIG. 13, a display 322 is included that is located on a display screen face 320 of the device 300 in the operating configuration 601 and upon which information is displayed to the operator during text entry. A keyboard 650 is also located on the keyboard face 640 of the handheld device 300 the operating configuration 601 and includes a plurality of keys as can be seen in FIG. 15. Also shown in FIG. 15 is a navigation row 70 including menu keys 652 and a navigation tool 327 located above the keyboard face 640 on the double hinged interconnector. The alphanumeric input keys 630 comprise a plurality of alphabetic and/or numeric keys having letters and/or numbers associated therewith. The order of the letters of the alphabetic keys on the presently disclosed handheld device 300 can be described as being of a traditional, but non-ITU Standard E.161 layout. This terminology has been utilized to delineate the fact that such a telephone keypad (as depicted in FIG. 6) might not allow for efficient text entry on the handheld device 300 FIG. 5 illustrates a keypad comprising the numerals 0-9 arranged in a traditional, ITU Standard E.161 numeric telephone keypad layout, including the
* and # keys flanking the 0 key. FIG. 6 illustrates a traditional or standard phone key arrangement or layout according to the ITU Standard E.161. Again, the keyboard 650, as shown in FIG. 15 for example, may be further provided with each of such layouts.

Keys, typically of a push-button or push-pad nature, like those in at least FIG. 6 for example, perform well as data entry devices but present problems to the user when they must also be used to effect navigational control over a screen-cursor. In order to solve this problem the present handheld wireless communication device 300 preferably includes programmable auxiliary inputs 105, 120 that may acts as a cursor navigation tool 327. While in the operating configuration 601, the navigation tool 327 accommodates thumb-actuation. One embodiment provides the navigation tool 327 in the form of a trackball 321 which is easily utilized to instruct two-dimensional screen cursor movement in substantially any direction, as well as act as an actuator when the navigational tool 327 is depressed like a button. The placement of the navigation tool 327, above the keyboard 650 and below the display screen 322, avoids interference during keyboarding and ensures that the navigational tool does not block the user's view of the display screen 322 during use. (See at least FIG. 15).

FIG. 7 shows the front of an embodiment of the clamshell handheld wireless communication device 300 in a closed configuration. In a closed configuration a display screen 322 and a keyboard 650 may be wholly or partially covered. The device 300 can be equipped with an external mirror 850, a camera 851, a flash 852 for use in conjunction therewith, as well as a light emitting diode 853. In at least the example of FIG. 7 replace items reside on the outer side or back of the second housing 95. Those skilled in the art will appreciate that these items could have different positions and still come within this disclosure. As shown in the example of FIG. 7, the second housing 95 of the device 300 may have a substantially square profile. FIG. 7 also illustrates that a length 801 of the second housing 95 may be less than its 95 width 802.

FIG. 8 shows the front of an embodiment of the device 300 in a closed configuration 600. A first side 81 of the interconnector 80 is shown in a mutually accommodating relationship with the first housing 90. Two charge contacts 807 are shown towards the lower portion of first housing 90. The first housing 90 can be seen to have a substantially square profile 800. Also seen in the example of FIG. 8, the length 801 of the first housing is less than a width of a second housing 802. As will be appreciated by those in the art, while a particular shape is shown, others are possible while still falling within the present disclosure.

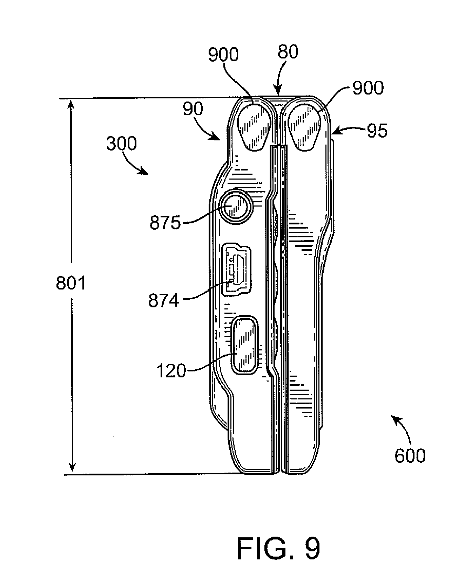

A closed configuration 600 is also shown FIG. 9, this time from the right side. Although it is compact, the device 300 has multiple input and output faculties, even when in the closed configuration 600. For example, a programmable key 120, a universal serial bus port 874 and a headset jack 875 are shown on the exterior of the device 300. In at least one example as illustrated in FIG. 9, some portion of the keyboard 650 can be seen between the first housing 90 and second housing 95. In another possible embodiment the device 300 could be so configured so as to completely conceal the keyboard 650 when viewed from the same side as in FIG. 9 while still coming within this disclosure. Also, the hinged interconnector 80 can be seen between two hinge-end covers 900 in the illustrated example.

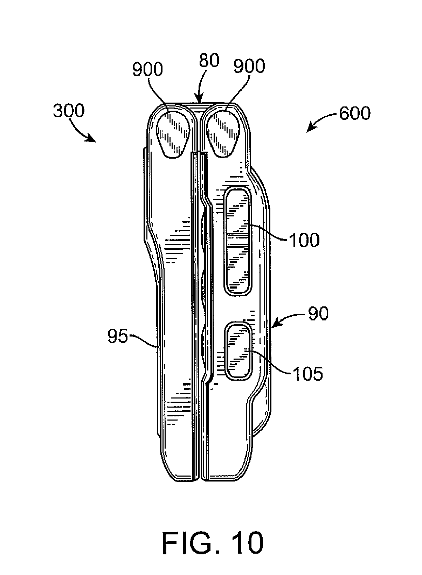

The other side view of the device 300 in a closed configuration 600 is shown in FIG. 10. Again, even though the embodiment is streamlined and compact, multiple input and output options exist. For example the embodiment of FIG. 10, the volume buttons or keys 100 in the first housing 90 are situated next to a user-programmable key 105. The volume buttons or keys can be configured so as to adjust the speaker (not shown) volume when the device 300 is used a telephone or to adjust the volume of the audio output associated with other functionalities. FIG. 10 shows the hinged interconnector 80 between two hinge-end covers 900. As will be described further herein, still other input and output options may be provided on the exterior of the device 300. Again, as will be appreciated by those in the art, while a particular shape is shown, others are possible while still falling within the present disclosure.

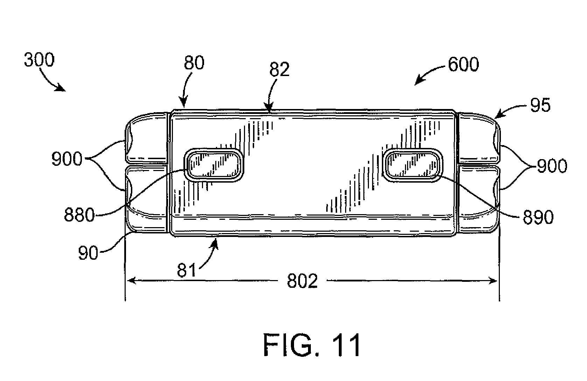

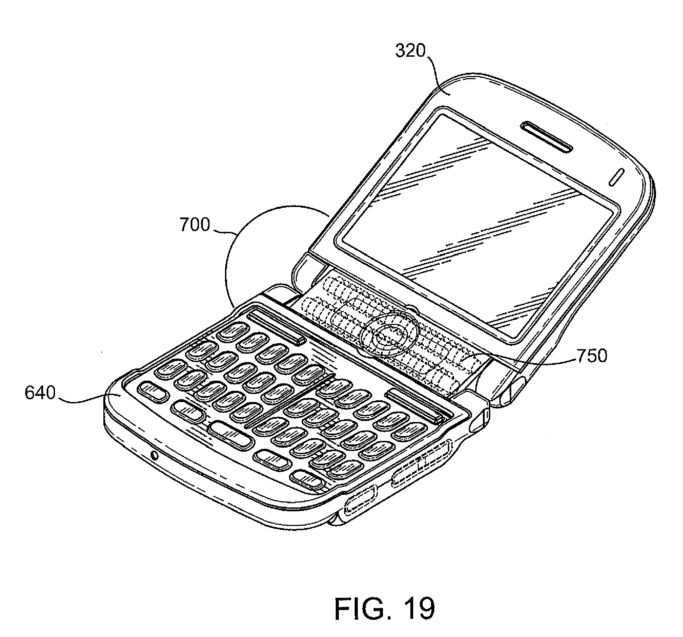

The top of an embodiment of the device 300 in a closed configuration 600 is depicted in FIG. 11. The edges of all four hinge-end covers 900 are visible. A mute/suspend key 880 is shown on the left side of the exterior of the interconnector 80 and a speaker phone button 890 is on the right. Such locations are examples only, and other possibilities exist within the present disclosure. Also, other keys or buttons may be located on the interconnector 80 which may take various shapes. Within the interconnector resides a spring assembly 750 (see FIG. 19) which runs through interconnector 80 to the hinge-end covers 900.

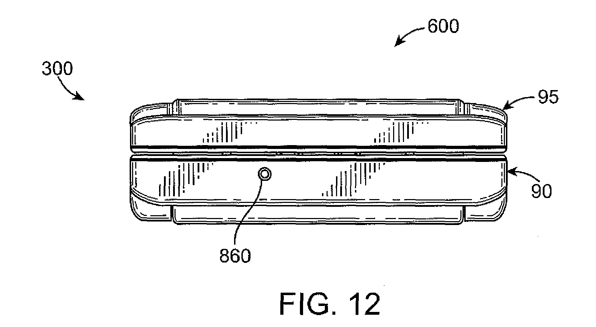

The compact nature of the device 300, which is at least in part made possible by the double-hinged flexible interconnector 80, is exemplified well in FIG. 11; the vertical distance, from the outer side of the interconnector 80 to the lower side 81, can be seen to be substantially less than the width 802 of the device. This relationship is shown in FIG. 12 as well, which shows the bottom of the device 300 in a closed configuration 600. The embodiment depicted in FIG. 12 shows a microphone hole 860 on the bottom of the first housing 90. It will be obvious to those skilled in the art that such a hole could be placed elsewhere on the device 300.

FIG. 13 shows the device 300 in an operating configuration 601. During operation, a user of the device 300 may maintain visual contact with the display screen 322 after resting the device 300 on a flat surface such as a desk or table. As discussed previously, a double-hinged interconnector 80 containing a spring assembly 750 is disclosed which will bias the display screen face 320 at a suitable angle 700 with the keyboard face 640. As shown in FIG. 13, the keyboard face 640 contains a keyboard 650 with a plurality of keys that can be of a physical nature such as actuable buttons, or they can be of a software nature, typically constituted by virtual representations of physical keys on a display screen 322 (referred to herein as "virtual keys"). It is also contemplated that the user input can be provided as a combination of the two types of keys. Each key of the plurality of keys has at least one actuable action which can be the input of a character, a command or a function. In this context, "characters" are contemplated to exemplarily include alphabetic letters, language symbols, numbers, punctuation, insignias, icons, pictures, and even a blank space. Input commands and functions can include such things as delete, backspace, moving a cursor up, down, left or right, initiating an arithmetic function or command, initiating a command or function specific to an application program or feature in use, initiating a command or function programmed by the user and other such commands and functions that are well known to those persons skilled in the art. Specific keys or other types of input devices can be used to navigate through the various applications and features thereof. Further, depending on the application 358 or feature in use, specific keys can be enabled or disabled.

In the case of physical keys of the type shown in FIG. 13, all or a portion of the plurality of keys have one or more indicia representing character(s), command(s), and/or functions(s) displayed at their top surface and/or on the surface of the area adjacent the respective key. In the instance where the indicia of a key's function is provided adjacent the key, the indicia can be printed on the device cover beside the key, or in the instance of keys located adjacent the display screen 322. Additionally, current indicia for the key may be temporarily shown nearby the key on the display screen 322.

Physical and virtual keys can be combined in many different ways as appreciated by those skilled in the art. In one embodiment, physical and virtual keys could be combined such that the plurality of enabled keys for a particular application or feature of the handheld wireless communication device 300 is shown on the display screen 322 in the same configuration as the physical keys. Using this configuration, the user can select the appropriate physical key corresponding to what is shown on the display screen 322. Thus, the desired character, command or function is obtained by depressing the physical key corresponding to the character, command or function displayed at a corresponding position on the display screen 322, rather than touching the display screen 322.

As made clear previously, the clamshell handheld wireless communication device 300 is configured to send and receive voice communications such as mobile telephone calls. To facilitate telephone calls, two call keys 660, 670 are provided below the navigation row 70 (so-called because it includes the navigation tool 327) as shown in FIG. 13. One of the two call keys is a call initiation key 660, and the other is a call termination key 670. The navigation row 70 also includes another pair of keys ("flanking keys" 606, 608) that are located immediately adjacent to the navigation tool 327, with one flanking key on either side of the navigation tool 327. It is noted that the outer keys are referred to as such not because they are necessarily the outermost keys in the navigation row - there may be additional keys located even further outwardly of the outer keys if desired - but rather because they are located outwardly with respect to the flanking keys 606, 608. The flanking keys 606, 608 may, for instance, constitute the menu keys 652, which include a menu call-up key 606 and an escape or back key 608. The menu call-up key 606 is used to bring up a menu on the display screen 322 and the escape key 608 is used to return to the previous screen or previous menu selection. The functions of the call keys and the menu keys may, of course, be provided by buttons that are located elsewhere on the handheld device 300, with different functions assigned to the outer keys and the flanking keys 606, 608.

With regard to keyboards, taking the one shown in FIG. 13 as an example, it is useful for handheld devices 300 to include a combined text-entry keyboard 650 and a telephony keyboard 650. Examples of such handheld devices 300 include mobile stations, cellular telephones, wireless personal digital assistants (PDAs), two-way paging devices, and others. Various keyboards are used with such devices and can be termed a full keyboard, a reduced-format keyboard, or phone key pad. In embodiments of a handheld device 300 having a full keyboard, the alphabetic characters are singly associated with the plurality of physical keys. Thus, in an English-language keyboard of this configuration, there are at least 26 keys in the plurality, with one letter per alphabetic key.

Turning to the device's 300 navigation tool 327 as shown in FIG. 13, both the first housing 90 and second housing 95 can have an accommodation space 620 recessed into each housing that receives at least a portion of the navigational tool 327 when the device 300 is in a closed configuration 600. In this configuration, the hinging interconnector provides a mounting platform for the navigational tool 327 and the first housing 90 and second housing accommodate for a protruding navigational tool 327 with the accommodation space 620 in the respective housing. In other embodiments, the accommodation space 620 might be provided only on the first housing 90 or only on the second housing 95.

Additionally, in one embodiment at least one input key may be mounted adjacent the navigational tool 327 on the hinging interconnector 80. In other embodiments as illustrated by at least FIG. 13, two input keys, each one flanking the navigational tool 327 on the hinging interconnector 80, may be provided. As discussed previously, the input key immediately to the left 608 of the navigational tool 327 may be a menu key 652 and the input key immediately to the right of the trackball 321 may be an escape key 606. In yet another embodiment, additional keys may be provided on the hinging interconnector. In one embodiment, the hinging interconnector 80 and the first housing 90 and the second housing 95 have approximately the same width relative the clamshell handheld electronic communication device 300 in the closed configuration 600. In another embodiment, the hinging interconnector 80 has a width approximately one-half the width of either of the first housing 90 and second housings 95 relative the clamshell handheld electronic communication device 300 in the closed configuration 600.
FIG. 1 illustrates an embodiment in which the hinging interconnector 80 is approximately three-fourth the width of either the first housing 90 and second housing 95 relative the clamshell handheld electronic communication device 300 in the closed configuration 600.
However, hinging interconnectors 80 of various widths, as would be recognized by one skilled in the art, are encompassed within the present disclosure.

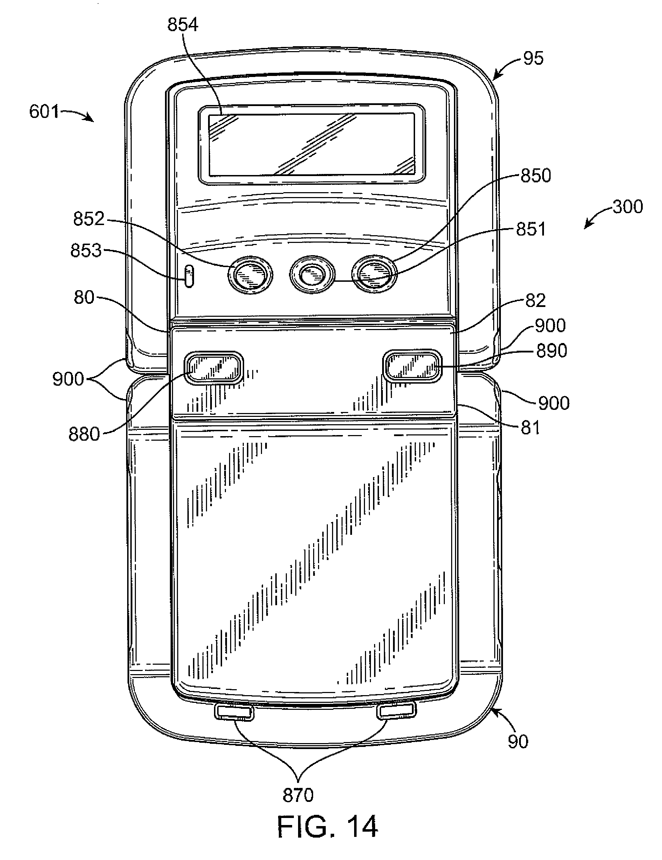

As set forth above, the interconnector 80 mediates between the first housing 90 and the second housing 95 as shown in FIG. 14, which shows the back of the device 300 in an operating configuration. Also shown is an external display 854 which can present the time, date, incoming call information to the user when the device 300 is in the closed configuration 600. Also a 'mute/hold' button 880 and a speaker phone key 890 are provided on the back of the hinging interconnector 80. As illustrated, the hinging interconnector 80 connects the lower first housing 90 and the upper second housing 95. Also disclosed are a mirror 850, a camera 851 and a flash 852 aligned on the outer face of the second housing 95. It will be obvious to those skilled in the art that alternate locations are possible while still falling within the scope of this disclosure.

An example of a front view of a clamshell handheld wireless communication device in an operating configuration is shown in FIG. 15. The navigation row 70, which in this example contains a navigational tool 327 and flanking keys 606, 608, rests on the interconnector 80 above the keyboard face 640 on a first housing 90 and beneath a display screen 320 in a second housing 95. The interconnector 80 may be so configured so as to bias the keyboard face 640 and display screen face toward an obtuse angle 700 of orientation when the keyboard face 640 and the display screen face are within a fifteen degree departure from the obtuse angle 700. Alternatively, the interconnector 80 may be so configured so as to bias when the keyboard face 640 and the display screen face are within a thirty degree departure from the obtuse angle 700. The choice of biasing angles, as between the keyboard face 640 and the interconnector 80, and the interconnector 80 and the second housing 95, and thus their sum, (the angle between the keyboard face 640 and display face 320), will be a function of the configuration of the spring assembly 750. The spring assembly 750 may comprise many types of springs, coil springs and cantilever springs be two examples. Those skilled in the art will recognize that such springs will be selected according to their spring constant, which is a function of their shape and the material from which they are made. Those skilled in the art will appreciate that various angles between the first housing 90 and the second housing 95, such as about 150 to about degrees, about 165 degrees to about 171 degrees and about 170 degrees to about 175 degrees, resulting from the choice and configuration of spring assembly are possible within this disclosure.

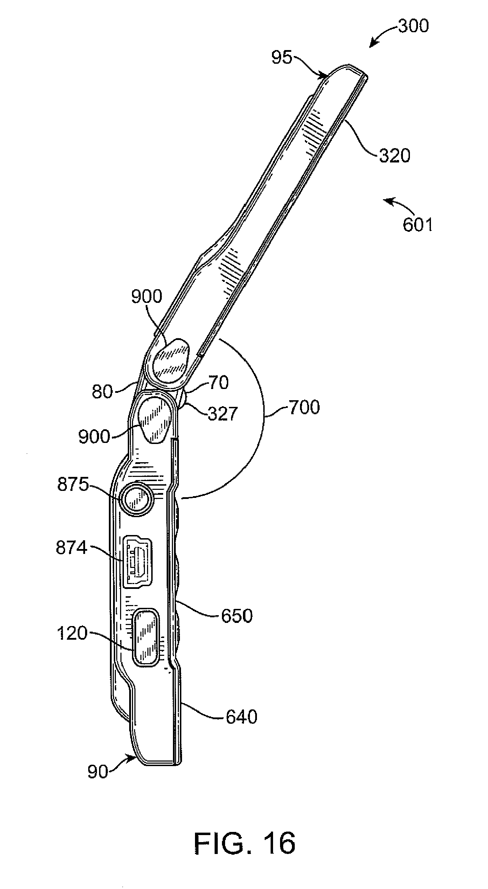

FIG. 16 illustrates a right side view of a clamshell handheld wireless communication device 300 in an operating configuration 601. Two hinge covers 900 as well as a head set jack 875, universal serial bus port 874 and user programmable key 120 are visible. Also visible in the example of FIG. 16 is the top of a navigational tool 327 which is shown as a trackball 321. The keyboard face 640 can be seen to be oriented at an obtuse angle 700 to display screen face 320. The hinged interconnector 80 may be configured such that the obtuse angle measures approximately 165 degrees. Alternately, the connector could be set up for a 150 degree angle between the display 320 and the keyboard 650. As described above, those skilled in the art will recognize that other angle configurations are possible within the scope of the present disclosure.

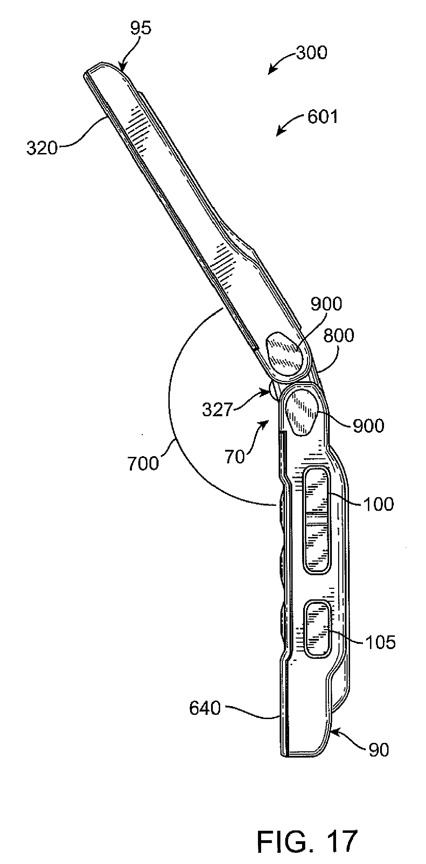

A left side view of the device 300 in an operating configuration is shown in FIG. 17. On the first housing 90 a user programmable key 105 and volume control keys 100 are shown. Also visible in this example are two of the four upper and lower hinge-end covers 900. Also visible is the top of a navigational tool 327 which is shown as a trackball 321. The keyboard face 640 forms an obtuse angle 700 with display screen face 320. As described above, the exact size of the obtuse angle 700 will be the result of the configuration of the spring assembly 750.

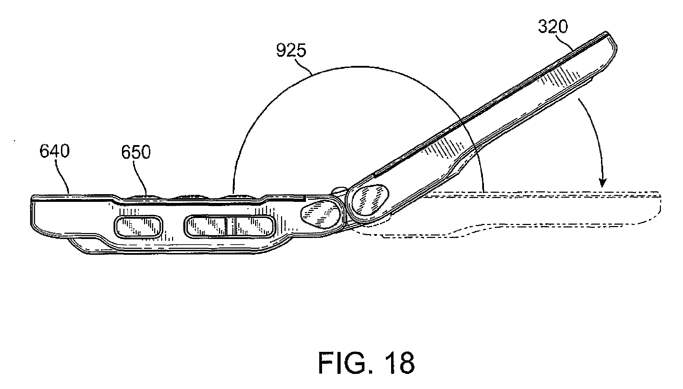

FIG. 18 illustrates a right side view of a clamshell handheld wireless communication device 300 transitioning into the fully open configuration 602 from the operating configuration in response to external forces. The spring assembly 750 within the interconnector 80 may be so configured so as to allow some resilient "give" from the operating configuration 601 into the fully open configuration 602. Since the spring assembly 750 within the interconnector 80 is biased towards preset obtuse angle 700, once the external force is removed, the device should return to its operating configuration 601.

A spring assembly within the pivotal interconnector 80 of the clamshell handheld wireless communication device 300 is shown in FIG. 19. As stated above, the spring assembly 750 within the interconnector 80 may be so configured so as to allow some resilient "give" from the operating configuration 601 into the fully open configuration 602. The interconnector may be configured to resiliently bias the communication device 300 toward closed 600 and operating configurations 601 and away from a fully open configuration 602 in which the keyboard face and display screen face 320 are substantially parallel to one another. This substantially parallel angle 925 may measure approximately 180 degrees. The electronic device 300 may be arranged such that the substantially parallel angle 925 may have other values, such as about 177 degrees to about 183 degrees, 179 degrees or 183 degrees, while still falling within this disclosure.

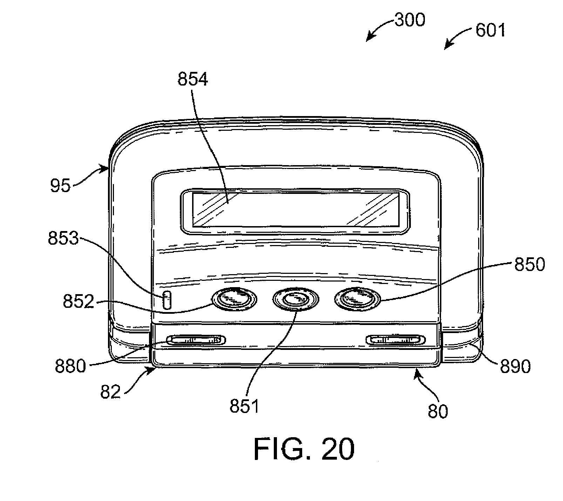

A top view of the device 300 in an operating configuration 601 is shown in FIG. 20. The mute/suspend key 880 and the speakerphone key 890 are shown comprised within the external side of the double hinged interconnector 80. Those skilled in the art will recognize that other buttons and other locations are possible within this disclosure. The external display screen 854 is shown at an angle. The exact value 700 of the angle will naturally vary according to the configuration of the spring assembly 750, as described above.

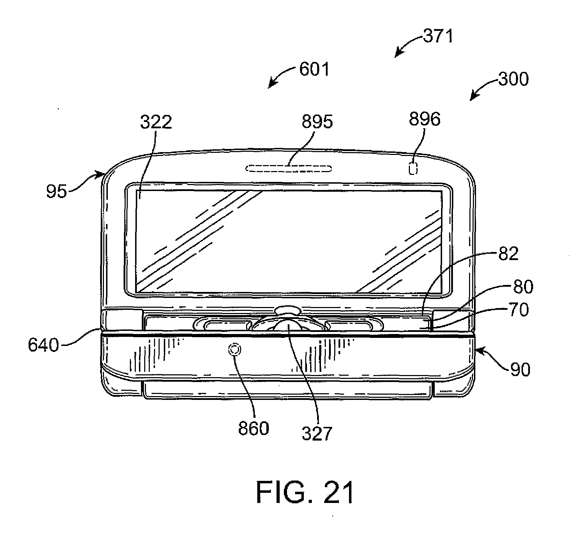

A bottom view of the device 300 in an operating configuration 601 is shown in FIG. 21. The obtuse angle 700 between the first housing 90 and the second housing 95 is evidenced by the fact that the navigational row 70 is partially obscured from view by the first housing 90. A microphone hole 860 is shown on the lower edge of the first housing 90, though other locations are possible within this disclosure. The second side 82 of the interconnector 80 which is joined to the second housing 95 can be seen over the lower edge of the keyboard face 640 within the first housing 90.

It will be understood that the foregoing description is that of the certain embodiments and that various changes and modifications may be made thereto without departing from the scope of this disclosure.

## Claims

1. A clamshell handheld electronic communication device (300) comprising:
a first housing (90) and a second housing (95) pivotally coupled one with the other by a double-hinged interconnector (80) that is pivotally connected at a first side (81) to said first housing (90) and is pivotally connected at a second side (82) to said second housing (95) and wherein one of said first and second housings (90, 95) has a keyboard face (640) and the other of said housings has a display screen face (320); and
said interconnector (80) has a navigational tool (327) mounted thereon and resiliently biases said communication device (300) toward closed and operating configurations (600, 601) and away from a fully open configuration (602) in which said keyboard face (640) and said display screen face (320) are oriented substantially parallel to one another.

2. The clamshell handheld electronic communication device (300) as recited in claim 1, wherein said keyboard face (640) is oriented at an obtuse angle (700) to said display screen face (320) in the operating configuration (601).

3. The clamshell handheld electronic communication device as recited in claim 2, wherein said interconnector (80) biases said keyboard face (640) and said display screen face (320) toward the obtuse angle (700) of orientation when said keyboard face (640) and said display screen face (320) are within a fifteen degree departure therefrom.

4. The clamshell handheld electronic communication device as recited in claim 3, wherein said obtuse angle (700) measures approximately 165 degrees between said keyboard face (640) and said display screen face (320).

5. The clamshell handheld electronic communication device (300) as recited in claims 2-4, wherein an angle (925) between said keyboard face (640) and said display screen face (320) in said fully open configuration (602) measures approximately 180 degrees.

6. The clamshell handheld electronic communication device (300) as recited in claims 3-5, wherein said interconnector (80) further comprises a spring assembly (750) that is relaxed in the operating configuration (601).

7. The clamshell handheld electronic communication device (300) as recited in claim 6, wherein said spring assembly (750) of said interconnector (80) is either tensioned or compressed when said keyboard face (640) and said display screen face (320) are within the fifteen degree departure.

8. The clamshell handheld electronic communication device as recited in claim 2, wherein said interconnector (80) biases said keyboard face (640) and said display screen face (320) toward the obtuse angle (700) of orientation when said keyboard face (640) and said display screen face (320) are within a thirty degree departure therefrom and wherein said interconnector (80) further comprises a spring assembly (750) that is relaxed in the operating configuration (601) and said spring assembly (750) is either tensioned or compressed when said keyboard face (640) and said display screen face (320) are within said thirty degree departure.

9. The clamshell handheld electronic communication device as recited in claim 2-8, wherein said obtuse angle (700) measures approximately 150 degrees between said keyboard face (640) and said display screen face (320).

10. The clamshell handheld electronic communication angle (300) as recited in claims 1-9, wherein said first housing (90) has a substantially square profile (800).

11. The clamshell handheld electronic communication device (300) as recited in claims 1-10, wherein said second housing (95) has a substantially square profile (800).

12. The clamshell handheld electronic communication device (300) as recited in claims 1-11, wherein a length (801) of said first housing (90) is less than a width (802) of the first housing (90).

13. The clamshell handheld electronic communication device (300) as recited in claims 1-11, wherein a length (801) of said second housing (95) is less than a width (802) of the second housing (95).

14. The clamshell handheld electronic communication device (300) as recited in claim 1, wherein the spring assembly comprises at least one coil spring.

15. The clamshell handheld electronic communication device (300) as recited in claim 1, wherein the spring assembly comprises at least one cantilever spring.
